(19) Europäisches Patentamt / European Patent Office / Office européen des brevets

(11) **EP 3 339 890 B1**

(12) **FASCICULE DE BREVET EUROPEEN**

(45) Date de publication et mention
de la délivrance du brevet:
**14.10.2020 Bulletin 2020/42**

(51) Int Cl.:
*G01S 11/02* (2010.01)     *G01S 11/08* (2006.01)
*B60R 25/00* (2013.01)     *E05B 81/00* (2014.01)
*G07C 9/00* (2020.01)     *G01S 13/84* (2006.01)

(21) Numéro de dépôt: **17209640.6**

(22) Date de dépôt: **21.12.2017**

(54) **PROCÉDÉ D'ESTIMATION D'UNE DISTANCE ENTRE UN IDENTIFIANT ET UN VÉHICULE**

VERFAHREN ZUR ABSCHÄTZUNG DES ABSTANDS ZWISCHEN EINEM IDENTIFIKATOR UND EINEM FAHRZEUG

METHOD FOR ESTIMATING A DISTANCE BETWEEN AN IDENTIFIER AND A VEHICLE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **21.12.2016 FR 1663037**

(43) Date de publication de la demande:
**27.06.2018 Bulletin 2018/26**

(73) Titulaire: **Valeo Comfort and Driving Assistance 94046 Créteil Cedex (FR)**

(72) Inventeur: **LECONTE, Eric
94046 Créteil CEDEX (FR)**

(74) Mandataire: **Delplanque, Arnaud
VALEO Comfort and Driving Assistance
76, rue Auguste Perret
Z.I. Europarc
94046 Créteil Cedex (FR)**

(56) Documents cités:
**US-A1- 2002 094 786     US-A1- 2003 090 365
US-A1- 2010 301 999     US-A1- 2011 090 062**

EP 3 339 890 B1

**Description**

DOMAINE TECHNIQUE AUQUEL SE RAPPORTE L'INVENTION

La présente invention concerne l'estimation d'une distance entre un identifiant et un véhicule.

Elle concerne plus particulièrement un procédé d'estimation d'une telle distance et une unité électronique adaptée à mettre en œuvre un tel procédé.

ARRIERE-PLAN TECHNOLOGIQUE

On connaît des systèmes de type PEPS (pour *"Passive Entry - Passive Start"*) dans lesquels la mise en œuvre d'une fonctionnalité (telle que le déverrouillage des portes d'un véhicule ou le démarrage d'un véhicule) est conditionnée par la présence à proximité du véhicule d'un identifiant (par exemple une clef portée par l'utilisateur du véhicule).

Ce type de système nécessite donc d'évaluer la distance entre l'identifiant et le véhicule.

Afin de pouvoir utiliser divers types d'appareils électroniques en tant qu'identifiant, même lorsqu'un tel appareil électronique n'est pas spécifiquement conçu dans ce but, on a cherché à évaluer la distance entre l'identifiant et le véhicule sur la base de signaux électromagnétiques utilisées par ailleurs pour échanger des données entre l'identifiant et le véhicule.

Dans les systèmes de communication utilisés de nos jours, ces signaux électromagnétiques ont en général des fréquences élevées (par exemple de l'ordre de 2400 MHz en technologie Bluetooth®) qui ne se prêtent pas à des techniques classiques d'évaluation de la distance (comme la technique dite RSSI pour *"Received Signal Strength Indication"*) à cause de problèmes d'anisotropie et de la présence fréquente de signaux réfléchis faussant les mesures.

Le document US2003090365 propose alors une solution pour évaluer la distance recherchée qui consiste à mesurer les phases de réception de signaux échangés entre l'identifiant et le véhicule pour deux fréquences différentes et à en déduire une estimation de la distance recherchée.

Pour mettre en œuvre cette solution, il est possible d'utiliser une boucle de phase asservie (communément appelée « boucle PLL ») afin de générer successivement deux signaux de fréquences différentes.

L'inconvénient de cette solution est qu'elle s'avère longue à mettre en œuvre. Le calage d'une boucle PLL sur une nouvelle fréquence demande en effet plus d'une centaine de microsecondes.

OBJET DE L'INVENTION

Afin de remédier à l'inconvénient précité de l'état de la technique, la présente invention propose de changer de fréquence sans avoir à recaler la boucle PLL.

Plus particulièrement, on propose selon l'invention un procédé d'estimation d'une distance séparant un véhicule automobile équipé d'un premier module de communication sans fil et un identifiant équipé d'un second module de communication sans fil, comprenant les étapes suivantes :

a) élaboration et émission, par un premier des modules de communication sans fil, d'un premier signal et d'un second signal ayant respectivement des première et seconde fréquences distinctes, ledit second signal étant obtenu par une opération de combinaison dudit premier signal avec un premier signal de décalage,

b) réception, par l'autre au moins des modules de communication sans fil, desdits premier et second signaux,

c) détermination d'une première phase de réception du premier signal et d'une seconde phase de réception du second signal, ladite seconde phase étant déterminée en fonction dudit second signal reçu et d'un second signal de décalage dont la fréquence est identique à celle dudit premier signal de décalage, et

d) estimation de ladite distance en fonction des première et seconde phases et des première et seconde fréquences.

Ainsi, à l'étape a), on se base sur le premier signal (qui peut par exemple être calé sur la première fréquence grâce à une boucle PLL) et sur un premier signal de décalage pour générer le second signal. L'élaboration de ce second signal demande alors un temps très réduit, inférieur à la microseconde.

A l'étape c), on utilise alors un second signal de décalage dont la fréquence est identique à celle du premier signal de décalage, ce qui permet d'obtenir très rapidement également la phase du second signal.

De cette façon, le procédé peut être répété très rapidement, ce qui permet d'affiner la distance recherchée.

D'autres caractéristiques avantageuses et non limitatives du procédé d'estimation conforme à l'invention sont les suivantes :

- à l'étape a), ledit second signal est obtenu en multipliant ledit premier signal par le premier signal de décalage et, à l'étape c), la seconde phase est déterminée en multipliant le second signal reçu par le second signal de décalage ;

- à l'étape c), la première phase est déterminée en multipliant le premier signal reçu par un signal de référence dont la fréquence est identique à la première fréquence ;

- à l'étape c), la seconde phase est déterminée en multipliant également le second signal par ledit signal de référence ;

- ledit premier signal est issu d'une boucle à phase asservie verrouillée sur ladite première fréquence ;

- les étapes a) à c) sont répétées sur plusieurs séquences successives, avec à chaque séquence un premier signal différent, et, à l'étape d), ladite distance est estimée compte tenu des phases et fréquences des premier et second signaux utilisés au cours desdites séquences ;
- à l'étape a) de chaque séquence, ledit premier signal est modifié par une opération de calage de la boucle à phase asservie ;
- à l'étape d), il est prévu de déterminer une pente d'une droite de régression liée à des points qui sont chacun associés à l'une desdites séquences et qui sont définis par une valeur d'écart entre les première et seconde fréquences et par une valeur d'écart entre les première et seconde phases ; et
- les étapes a) à c) sont répétées en sens inverse, en échangeant de nouveaux signaux depuis ledit autre module de communication sans fil vers le premier module de communication sans fil, et, à l'étape d), ladite distance est estimée compte tenu des phases et fréquences des nouveaux signaux.

L'invention concerne aussi un procédé de pilotage d'une fonctionnalité d'un véhicule automobile, comprenant une opération de mise en œuvre d'un procédé d'estimation tel que précité, suivie d'une opération de mise en œuvre éventuelle de ladite fonctionnalité en fonction de la distance estimée.

L'invention concerne également une unité électronique pour véhicule automobile adaptée à communiquer avec un identifiant extérieur au véhicule automobile, comprenant :

- un premier élément conçu pour recevoir des premier et second signaux émis par ledit identifiant, ledit second signal présentant une fréquence fonction de la fréquence du premier signal et de la fréquence d'un premier signal de décalage,
- un second élément conçu pour déterminer les phases des premier et second signaux, et qui est adapté à déterminer la phase du second signal en multipliant le second signal reçu par un second signal de décalage dont la fréquence est identique à celle dudit premier signal de décalage, et
- un troisième élément conçu pour estimer une distance séparant le véhicule automobile de l'identifiant sur la base des phases et des fréquences des premier et second signaux.

Préférentiellement, cette unité comporte en outre :

- un quatrième élément conçu pour élaborer un autre premier signal ayant une première fréquence, et
- un cinquième élément conçu pour élaborer un autre second signal ayant une seconde fréquence, en multipliant ledit autre premier signal par ledit second signal de décalage.

**DESCRIPTION DETAILLEE D'UN EXEMPLE DE REALISATION**

La description qui va suivre en regard des dessins annexés, donnés à titre d'exemples non limitatifs, fera bien comprendre en quoi consiste l'invention et comment elle peut être réalisée.

Sur les dessins annexés :

- la figure 1 représente schématiquement les éléments principaux d'un système dans lequel peut être mise en œuvre l'invention ;
- la figure 2 représente schématiquement la propagation de deux signaux de fréquences différentes l'une de l'autre ; et
- la figure 3 est un logigramme représentant un procédé d'estimation de la distance séparant un identifiant et un véhicule.

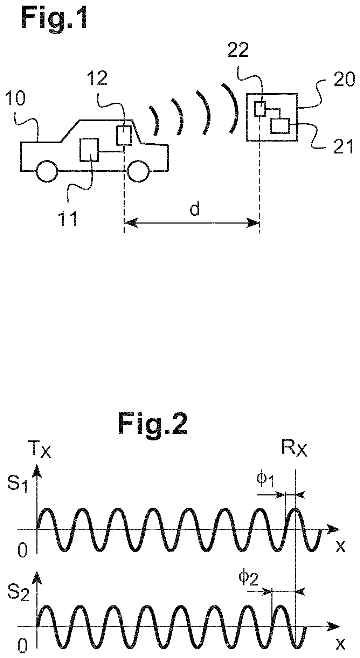

La figure 1 représente schématiquement les éléments principaux d'un système dans lequel peut être mise en œuvre l'invention.

Un tel système comprend un véhicule automobile 10 et un identifiant 20. Cet identifiant 20 peut par exemple être une clé ou un badge d'accès au véhicule 10 ou, de manière préférentielle, un terminal utilisateur tel qu'un téléphone mobile ou un ordiphone (ou *"smartphone"* selon l'application anglaise couramment utilisée) muni de droits d'accès au véhicule automobile 10.

Le véhicule automobile 10 est équipé d'une unité électronique de commande 11 et d'un module de communication 12.

L'unité électronique de commande 11 comprend par exemple un microprocesseur et au moins une mémoire, par exemple une mémoire non-volatile réinscriptible. La mémoire mémorise notamment des instructions de programme qui permettent, lorsqu'elles sont exécutées par le microprocesseur, la mise en œuvre par l'unité électronique de commande 11 des procédés décrits ci-dessous.

La mémoire de l'unité électronique de commande 11 mémorise en outre une clé cryptographique K (qui a par exemple été inscrite au sein de l'unité électronique de commande 11 lors de sa fabrication).

En variante, l'unité électronique de commande 11 pourrait être réalisée sous la forme d'un circuit intégré à application spécifique (ou ASIC pour *"Application Specific Integrated Circuit"*).

Le module de communication 12 est conçu pour établir une liaison sans fil avec d'autres appareils électroniques, ici une liaison de type "*Bluetooth Low Energy*" (ou "*BLE*"). Le module de communication 12 est donc notamment conçu pour émettre et recevoir des signaux électromagnétiques (typiquement de fréquence supérieure à 1 MHz, voire à 500 MHz), ici dans la bande de 2,4 GHz.

L'identifiant 20 est généralement porté par un utilisateur du véhicule automobile 10 et permet la commande de certaines fonctionnalités du véhicule automobile 10 (par exemple le déverrouillage des portes du véhicule automobile 10), notamment lorsqu'il est approché du véhicule automobile 10. L'identifiant 20 peut éventuellement comporter en outre des boutons de commande, à l'aide desquels l'utilisateur peut commander certaines au moins des fonctionnalités précitées ou d'autres fonctionnalités du véhicule automobile 10.

L'identifiant 20 comprend une unité de commande 21 et un module de communication 22.

L'unité de commande 21 est par exemple réalisée au moyen d'un microprocesseur et d'au moins une mémoire, par exemple une mémoire non volatile réinscriptible. La mémoire mémorise notamment des instructions de programme qui permettent, lorsqu'elles sont exécutées par le microprocesseur, la mise en œuvre par l'unité de commande 21 des procédés décrits ci-dessous.

La mémoire de l'unité de commande 21 mémorise en outre la clé cryptographique K. Dans le cas où l'identifiant 20 est un badge (ou clé) d'accès au véhicule, la clé cryptographique K a par exemple été inscrite dans la mémoire de l'unité de commande 21 lors de la fabrication de l'identifiant 20. Dans la variante mentionnée ci-dessus où l'identifiant 20 est un terminal utilisateur, la clé cryptographique K a par exemple été reçue d'un serveur distant et mémorisée lors d'une phase de souscription à un service de commande des fonctionnalités du véhicule au moyen du terminal utilisateur.

En variante, l'unité de commande 21 pourrait être réalisée sous la forme d'un circuit intégré à application spécifique.

Le module de communication 22 est conçu pour établir une liaison sans fil (ici de type "*Bluetooth Low Energy*" ou "*BLE*") avec d'autres appareils électroniques, en particulier avec l'unité électronique de commande 11 du véhicule 10 via le module de communication 12 mentionné plus haut. Le module de communication 22 est donc lui aussi conçu pour émettre et recevoir des signaux électromagnétiques (typiquement de fréquence supérieure à 1 MHz, voire à 500 MHz), ici dans la bande à 2,4 GHz.

Grâce à la liaison sans fil ainsi établie entre le module de communication 12 du véhicule 10 et le module de communication 22 de l'identifiant 20, des données peuvent être échangées entre l'unité électronique de commande 11 du véhicule 10 et l'unité de commande 21 de l'identifiant 20, comme expliqué plus loin.

Les signaux électromagnétiques échangés entre les modules de communications 12, 22 peuvent en outre être utilisés pour évaluer la distance d séparant l'identifiant 20 et le véhicule 10, sur la base du principe expliqué à présent en référence à la figure 2.

On a en effet schématiquement représenté en figure 2 la propagation de deux signaux $S_1$, $S_2$ de fréquences respectives $f_1$, $f_2$ (différentes l'une de l'autre) entre un module émetteur TX et un module récepteur RX (et selon un axe Ox passant par ces deux modules).

Ces deux signaux $S_1$, $S_2$ sont sinusoïdaux et ils sont émis lorsqu'ils passent par la valeur nulle, en phase ascendante. Autrement formulé, ces signaux sont émis avec une phase d'émission égale à zéro.

La mesure de la phase de réception de chacun de ces signaux au niveau du récepteur RX permet de déduire une estimation de la distance d séparant le module émetteur TX et le module récepteur RX selon l'équation *eq1* suivante :

$$d = \frac{c}{2\pi} \cdot \frac{\Phi_2 - \Phi_1}{f_2 - f_1}$$

où c est la célérité des ondes électromagnétiques.

L'invention porte alors sur la manière selon laquelle ces signaux sont émis et sur la manière selon laquelle les phases de réception des signaux sont calculées.

L'invention propose en effet d'élaborer le second signal $S_2$ en fonction du premier signal $S_1$ et d'un premier signal de décalage $S_0$, et elle propose de déterminer la phase $\phi_2$ du second signal $S_2$ sur la base du second signal $S_2$ reçu et d'un second signal de décalage $S_0$' dont la fréquence $f_0$ est identique à celle du premier signal de décalage $S_0$.

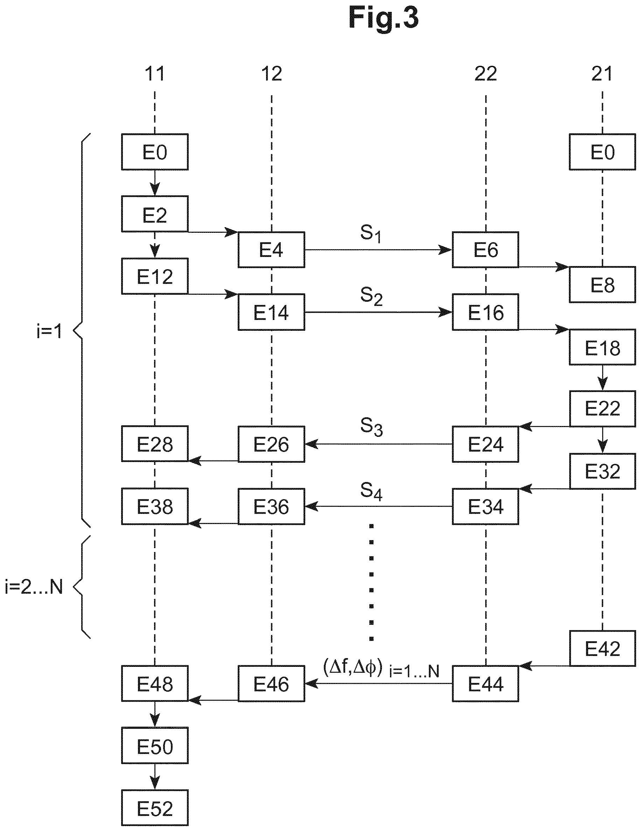

Pour mieux comprendre l'invention, on peut décrire plus en détail un mode de réalisation de cette invention, en référence à la figure 3.

Dans ce mode de réalisation, on considère que l'unité électronique de commande 11 du véhicule 10 et l'unité de commande 21 de l'identifiant 20 comportent chacune un oscillateur (par exemple un quartz) permettant d'obtenir un signal à fréquence fixe et invariable (par exemple un signal à 24 MHz).

On considère aussi que grâce à ce signal, l'unité électronique de commande 11 du véhicule 10 et l'unité de commande 21 de l'identifiant 20 peuvent chacune obtenir :

- un signal de base $S_{base}$, $S'_{base}$ qui est sinusoïdal et dont la fréquence $f_{base}$ est ici choisie égale à 2400 MHz (dans la bande de fréquences du protocole Bluetooth®), et
- un signal de décalage $S_0$, $S'_0$ qui est sinusoïdal et dont la fréquence $f_0$ est très inférieure à la fréquence $f_{base}$. Cette fréquence $f_0$ est ici choisie égale à 1 MHz.

Dans la suite de cet exposé, on considérera que le signal de décalage $S_0$ de l'unité électronique de commande 11 et le signal de décalage $S'_0$ de l'unité de commande 21 présentent des caractéristiques identiques et on leur affectera, par simplification, la même référence $S_0$.

On considérera également que le signal de base $S_{base}$ de l'unité électronique de commande 11 et le signal de base S'$_{base}$ de l'unité de commande 21 présentent des caractéristiques identiques et on leur affectera, par simplification, la même référence S$_{base}$.

Dans ce mode de réalisation, on considère que l'unité électronique de commande 11 du véhicule 10 et l'unité de commande 21 de l'identifiant 20 comportent chacune aussi un boucle à phase asservie (ci-après appelée « boucle PLL »), qui reçoit en entrée le signal de base S$_{base}$. Chaque boucle PPL est conçue pour pouvoir se caler (ou « se verrouiller ») afin de générer un signal de référence S$_{ref}$, S'$_{ref}$, à une fréquence f$_{ref}$ bien identifiée (comprise dans la bande des 2400 MHz).

Dans la suite de cet exposé, on considérera que le signal de référence S$_{ref}$ issu de la PLL de l'unité électronique de commande 11 et le signal de référence S'$_{ref}$ issu de la PLL de l'unité de commande 21 présentent des caractéristiques identiques et on leur affectera, par simplification, la même référence S$_{ref}$.

Le procédé mis en œuvre en combinaison par l'unité électronique de commande 11 du véhicule 10 et par l'unité de commande 21 de l'identifiant 20 est alors opéré en boucle, de manière récursive. Il est ici prévu de répéter N fois les mêmes étapes (on parle de « N séquences *i* successives »). Ici, N est choisi égal à 80 de façon à ce que la distance d recherchée entre le véhicule automobile 10 et l'identifiant 20 puisse être déterminée avec une très grande précision.

On peut tout d'abord s'intéresser à la première séquence *(i=1)*.

Comme le montre la figure 3, au cours d'une étape préalable E0, l'unité électronique de commande 11 du véhicule 10 et celle de l'identifiant 20 calent leurs boucles PLL de telle sorte que le signal de référence S$_{ref}$ en sortie de chaque boucle PLL présente une fréquence f$_{ref}$ égale à 2400 MHz.

Dans cette première séquence, le signal S$_{ref}$ est donc choisi égal au signal S$_{base}$.

Puis, au cours d'une étape E2, l'unité électronique de commande 11 du véhicule 10 génère un premier signal S$_1$ présentant une première fréquence f$_1$.

Ce premier signal S$_1$ est choisi égal au signal de référence S$_{ref}$, si bien qu'on peut écrire f$_1$ = f$_{ref}$ = 2400 MHz.

Ce premier signal S$_1$ est alors transmis au module de communication sans fil 12 du véhicule automobile de façon à qu'il l'émette (étape E4).

A l'étape E6, ce premier signal S$_1$ est reçu par le module de communication sans fil 22 de l'identifiant 20.

Il est alors transmis à l'unité électronique de commande 21 de l'identifiant 20.

Au cours de l'étape E8, l'unité électronique de commande 21 détermine la phase φ$_1$ de réception du premier signal S$_1$.

Pour cela, le premier signal S$_1$ est multiplié par le signal de référence S$_{ref}$ issu de la boucle PLL de l'identifiant 20. Cette opération de multiplication de deux signaux sinusoïdaux génère un signal ayant une composante continue et une composante à 4800 MHZ.

Une opération de filtrage, par exemple au moyen d'un filtre passe-bas, permet alors de supprimer la composante à 4800 MHZ. Le signal continu obtenu présente alors une tension qui est directement proportionnelle à la phase φ$_1$.

Ainsi l'unité électronique de commande 21 de l'identifiant 20 peut-elle acquérir la phase φ$_1$ et la fréquence f$_1$ du signal S$_1$ reçu.

Après un cours laps de temps (inférieur à 10 microsecondes), au cours d'une étape E12, l'unité électronique de commande 11 du véhicule 10 élabore un second signal S$_2$.

Pour cela, elle multiplie le premier signal S$_1$ par le signal de décalage S$_0$. Cette opération permet d'obtenir un signal ayant deux composantes, l'une à 2399 MHz et l'autre à 2401 MHz.

Puis, elle filtre ce signal par un filtre passe-haut de façon à éliminer la composante à 2399 MHz.

Le signal obtenu, appelée second signal S$_2$, est alors transmis au module de communication sans fil 12 du véhicule automobile 10 de façon à qu'il l'émette (étape E14).

A l'étape E16, ce second signal S$_2$ est reçu par le module de communication sans fil 22 de l'identifiant 20.

Il est alors transmis à l'unité électronique de commande 21 de l'identifiant 20.

Au cours de l'étape E18, l'unité électronique de commande 21 détermine la phase φ$_2$ de réception de ce second signal S$_2$.

Pour cela, le second signal S$_2$ est tout d'abord multiplié par le signal de référence S$_{ref}$. Cette opération de multiplication de deux signaux sinusoïdaux génère un signal ayant une composante à 1 MHz et une composante à 4801 MHZ.

La composante à 4801 MHZ est alors supprimée au moyen d'un filtre passe-bas.

Puis, le signal obtenu est multiplié par le signal de décalage S$_0$. Cette opération de multiplication de deux signaux sinusoïdaux génère un signal ayant une composante continue et une composante à 2 MHZ.

Une opération de filtrage, par exemple au moyen d'un filtre passe-bas, permet alors de supprimer la composante à 2 MHZ. Le signal continu obtenu présente alors une tension qui est directement proportionnelle à la phase φ$_2$.

Ainsi l'unité électronique de commande 21 de l'identifiant 20 peut-elle acquérir la phase φ$_2$ et la fréquence f$_2$ du second signal S$_2$ reçu.

A l'issue de ces étapes E0 à E18, l'unité électronique de commande 21 de l'identifiant 20 mémorise un couple de valeurs (Δf, Δφ)$_{i=1}$, avec

$$\Delta f = f_2 - f_1,$$

et

$$\Delta\Phi = \Phi_2 - \Phi_1.$$

On pourrait alors prévoir de déterminer la distance d recherchée sur la seule base de ce couple de valeurs, au moyen de l'équation eq1 précitée.

Toutefois, pour affiner la valeur de la distance d, on va tout d'abord renvoyer des troisième et quatrième signaux depuis l'identifiant 20 vers le véhicule automobile 10 (étapes E22 à E38), puis on va répéter N fois la séquence.

Ainsi, au cours d'une étape E22, l'unité électronique de commande 21 de l'identifiant génère un troisième signal $S_3$ présentant une fréquence $f_3$.

En pratique, ce troisième signal $S_3$ présente des caractéristiques identiques à celles du premier signal $S_1$ (il est donc choisi égal au signal de référence $S_{ref}$) si bien qu'on peut écrire $f_3 = f_{ref} = 2400$ MHz.

Ce troisième signal $S_3$ est alors transmis au module de communication sans fil 22 de l'identifiant 20 de façon à qu'il l'émette (étape E24).

A l'étape E26, ce troisième signal $S_3$ est reçu par le module de communication sans fil 12 du véhicule automobile 10.

Il est alors transmis à l'unité électronique de commande 11 du véhicule.

Au cours de l'étape E28, l'unité électronique de commande 11 détermine la phase $\phi_3$ de réception du troisième signal $S_3$.

Pour cela, le troisième signal $S_3$ est multiplié par le signal de référence $S_{ref}$ issu de la boucle PLL du véhicule automobile 10.

Une opération de filtrage au moyen d'un filtre passe-bas permet alors de générer un signal continu dont la tension est directement proportionnelle à la phase $\phi_3$.

Après un cours laps de temps (inférieur à 10 microsecondes), au cours d'une étape E32, l'unité électronique de commande 21 de l'identifiant 20 élabore un quatrième signal $S_4$.

Ce quatrième signal $S_4$ présente les mêmes caractéristiques que le second signal $S_2$, et il est obtenu de la même manière (en multipliant le troisième signal $S_3$ par le signal de décalage $S_0$ puis en utilisant un filtre passe-haut).

Le quatrième signal $S_4$ est alors transmis au module de communication sans fil 22 de l'identifiant 20 de façon à qu'il l'émette (étape E34).

A l'étape E36, ce quatrième signal $S_4$ est reçu par le module de communication sans fil 12 du véhicule automobile 10.

Il est alors transmis à l'unité électronique de commande 11 du véhicule.

Au cours de l'étape E38, l'unité électronique de commande 11 détermine la phase $\phi_4$ de réception de ce quatrième signal $S_4$ de la même manière que précitée (par des opérations de multiplication du quatrième signal $S_4$ par le signal de référence $S_{ref}$, de filtrage au moyen d'un filtre passe-bas, de multiplication du signal obtenu par le signal de décalage $S_0$, puis de filtrage au moyen d'un filtre passe-bas).

A l'issue de ces étapes E22 à E38, l'unité électronique de commande 11 du véhicule automobile 10 mémorise un couple de valeurs $(\Delta f', \Delta\phi')_{i=1}$, avec

$$\Delta f' = f_4 - f_3,$$

et

$$\Delta\Phi' = \Phi_4 - \Phi_3.$$

Une fois la première séquence ainsi achevée, cette séquence est répétée N fois, en modifiant à chaque fois, au cours de l'étape préalable, la fréquence du signal de référence $S_{ref}$.

Pour cela, lorsque la première séquence est achevée, l'unité électronique de commande 11 du véhicule 10 et celle de l'identifiant 20 calent leurs boucles PLL de telle sorte que le signal de référence $S_{ref}$ en sortie de chaque boucle PLL présente une fréquence $f_{ref}$ égale à 2402 MHz.

Au cours de la seconde séquence (*i=2*), les premier et troisième signaux $S_1$, $S_3$ échangés présenteront alors des fréquences $f_1$, $f_3$ de 2402 MHz, et les second et quatrième signaux $S_2$, $S_4$ échangés présenteront des fréquences $f_2$, $f_4$ de 2403 MHz.

Plus généralement, au cours de chaque séquence *i* subséquente, les premier, second, troisième et quatrième signaux $S_1$, $S_2$, $S_3$, $S_4$ échangés présenteront des fréquences :

$$f_1 = f_3 = 2400 + 2 . (i - 1),$$

en MHz, et

$$f2 = f4 = 2401 + 2 . (i - 1),$$

en MHz.

A l'issue des N séquences, l'unité électronique de commande 21 de l'identifiant 20 mémorisera N couples de valeurs $(\Delta f, \Delta\Phi)_i$ et l'unité électronique de commande 11 du véhicule automobile 10 mémorisera N autres couples de valeurs $(\Delta f', \Delta\Phi')_i$.

L'estimation de la distance d entre le véhicule automobile 10 et l'identifiant 20 pourrait alors être réalisée de diverses manières.

Ici, cette estimation sera réalisée en fonction des 2 fois N couples de valeurs acquis.

Pour cela, au cours de l'étape E42, l'unité électronique de commande 21 de l'identifiant 20 élabore un signal de données comprenant, sous forme numérisée, les N couples de valeurs $(\Delta f, \Delta\Phi)_i$.

Ce signal de données est alors transmis au module de communication sans fil 22 de l'identifiant 20 de façon à qu'il l'émette (étape E44).

A l'étape E46, ce signal de données est reçu par le module de communication sans fil 12 du véhicule automobile 10.

Il est alors transmis à l'unité électronique de commande 11 du véhicule 10.

Au cours de l'étape E48, l'unité électronique de commande 11 estime alors la distance d.

Il détermine pour cela la pente d'une droite de régression liée à 2 fois N points qui correspondent respectivement aux N couples de valeurs $(\Delta f, \Delta\Phi)_i$ et aux N couples de valeurs $(\Delta f', \Delta\Phi')_i$.

Cela revient à tracer un graphique ayant en abscisse des écarts de fréquences $\Delta f$ et en ordonnée des écarts de phases $\Delta\Phi$, à placer sur ce graphique les 2 fois N points définis ci-dessus, et à trouver la pente de la droite moyenne passant par ce nuage de points (« moyenne » au sens de la méthode des moindres carrés). La pente de cette droite est en effet liée à la distance d, selon l'équation eq1. Ainsi l'unité électronique de commande 11 peut-elle obtenir une bonne estimation de la distance d.

Puis, au cours d'une étape E50, l'unité électronique de commande 11 du véhicule 10 vérifie si la distance d est inférieure à un seuil prédéterminé (ce qui signifie que l'usager du véhicule est proche du véhicule). Si tel n'est pas le cas, le processus s'interrompt. Dans le cas contraire, le véhicule automobile 10 va s'assurer que l'identifiant 20 est autorisé à accéder au véhicule.

Cette étape d'authentification est bien connue de l'homme du métier et elle ne sera pas ici décrite en détail. Elle peut par exemple consister pour le véhicule automobile 10 à envoyer un défi cryptographique à l'identifiant 20, puis à traiter la réponse à ce défi émise par l'identifiant 20 de façon à vérifier que l'identifiant 20 mémorise une clé cryptographique K identique à celle mémorisée par l'unité électronique de commande 11 du véhicule 10.

Si l'authentification est réussie, au cours d'une étape E52, l'unité électronique de commande 11 du véhicule 10 laisse l'usager accéder à la fonctionnalité requise (déverrouillage des portes, démarrage du moteur, ...). Sinon, l'accès est refusé.

**Revendications**

1. Procédé d'estimation d'une distance (d) séparant un véhicule automobile (10) équipé d'un premier module de communication sans fil (12) et un identifiant (20) équipé d'un second module de communication sans fil (22), comprenant les étapes suivantes :

   a) élaboration et émission, par un premier des modules de communication sans fil (12, 22), d'un premier signal $(S_1)$ et d'un second signal $(S_2)$ ayant respectivement des première et seconde fréquences $(f_1, f_2)$ distinctes,

   b) réception, par l'autre au moins des modules de communication sans fil (12, 22), desdits premier et second signaux $(S_1, S_2)$,

   c) détermination d'une première phase $(\Phi_1)$ de réception du premier signal $(S_1)$ et d'une seconde phase $(\Phi_2)$ de réception du second signal $(S_2)$, et

   d) estimation de ladite distance (d) en fonction des première et seconde phases $(\Phi_1, \Phi_2)$ et des première et seconde fréquences $(f_1, f_2)$,

   à l'étape a), ledit second signal $(S_2)$ étant obtenu par une opération de combinaison dudit premier signal $(S_1)$ avec un premier signal de décalage $(S_0)$, et

   , à l'étape c), la seconde phase $(\Phi_2)$ étant déterminée en fonction dudit second signal $(S_2)$ reçu et d'un second signal de décalage $(S_0')$ dont la fréquence $(f_0)$ est identique à celle dudit premier signal de décalage $(S_0)$

   **caractérisé en ce que** à l'étape a), ledit second signal $(S_2)$ est obtenu en multipliant ledit premier signal $(S_1)$ par le premier signal de décalage $(S_0)$ et dans lequel, à l'étape c), la seconde phase $(\Phi_2)$ est déterminée en multipliant le second signal $(S_2)$ reçu par le second signal de décalage $(So')$..

2. Procédé d'estimation selon la revendication 1, dans lequel, à l'étape c), la première phase $(\Phi_1)$ est déterminée en multipliant le premier signal $(S_1)$ reçu par un signal de référence $(S_{ref})$ dont la fréquence $(f_{ref})$ est identique à la première fréquence $(f_1)$.

3. Procédé d'estimation selon la revendication 2, dans lequel, à l'étape c), la seconde phase $(\Phi_2)$ est déterminée en multipliant également le second signal $(S_2)$ par ledit signal de référence $(S_{ref})$.

4. Procédé d'estimation selon l'une des revendications précédentes, dans lequel ledit premier signal $(S_1)$ est issu d'une boucle à phase asservie (PLL) verrouillée sur ladite première fréquence $(f_1)$.

5. Procédé d'estimation selon l'une des revendications précédentes, dans lequel les étapes a) à c) sont répétées sur plusieurs séquences successives, avec à chaque séquence un premier signal $(S_1)$ différent, et dans lequel à l'étape d), ladite distance (d) est estimée compte tenu des phases et fréquences des premier et second signaux utilisés au cours desdites séquences.

6. Procédé d'estimation selon les deux revendications précédentes, dans lequel, à l'étape a) de chaque séquence, ledit premier signal ($S_1$) est modifié par une opération de calage de la boucle à phase asservie (PLL).

7. Procédé d'estimation selon l'une des deux revendications précédentes, dans lequel, à l'étape d), il est prévu de déterminer une pente d'une droite de régression liée à des points qui sont chacun associés à l'une desdites séquences et qui sont définis par une valeur d'écart entre les première et seconde fréquences ($f_1$, $f_2$) et par une valeur d'écart entre les première et seconde phases ($\Phi_1$, $\Phi_2$).

8. Procédé d'estimation selon l'une des revendications précédentes, dans lequel les étapes a) à c) sont répétées en sens inverse, en échangeant de nouveaux signaux depuis ledit autre module de communication sans fil (12, 22) vers le premier module de communication sans fil (12, 22), et dans lequel à l'étape d), ladite distance (d) est estimée compte tenu des phases et fréquences des nouveaux signaux.

9. Procédé de pilotage d'une fonctionnalité d'un véhicule automobile (10), comprenant une opération de mise en œuvre d'un procédé d'estimation conforme à l'une des revendications précédentes, puis une opération de mise en œuvre éventuelle de ladite fonctionnalité en fonction de la distance (d) estimée.

10. Unité électronique (11) pour véhicule automobile (10) adaptée à communiquer avec un identifiant (20) extérieur au véhicule automobile (10), comprenant :

- un premier élément conçu pour recevoir des premier et second signaux ($S_1$, $S_2$) émis par ledit identifiant (20), ledit second signal ($S_2$) présentant une fréquence ($f_2$) fonction de la fréquence ($f_1$) du premier signal ($S_1$) et de la fréquence ($f_0$) d'un premier signal de décalage ($S_0$),
- un second élément conçu pour déterminer les phases ($\Phi_1$, $\Phi_2$) des premier et second signaux ($S_1$, $S_2$), et
- un troisième élément conçu pour estimer une distance (d) séparant le véhicule automobile (10) de l'identifiant (20) sur la base des phases ($\Phi_1$, $\Phi_2$) et des fréquences ($f_1$, $f_2$) des premier et second signaux ($S_1$, $S_2$), ledit second élément étant adapté à déterminer la phase ($\Phi_2$) du second signal ($S_2$) en multipliant le second signal ($S_2$) reçu par un second signal de décalage ($S_0$') dont la fréquence ($f_0$) est identique à celle dudit premier signal de décalage ($S_0$), **caractérisé en ce que** ledit second signal ($S_2$) est obtenu en multipliant ledit premier signal ($S_1$) par le premier signal de décalage ($S_0$) et dans lequel, la seconde phase ($\Phi_2$) est déterminée en multipliant le second signal ($S_2$) reçu par le

second signal de décalage ($S_0$')..

11. Unité électronique (11) selon la revendication précédente, dans laquelle il est prévu :

- un quatrième élément conçu pour élaborer un autre premier signal ($S_1$) ayant une première fréquence ($f_1$), et
- un cinquième élément conçu pour élaborer un autre second signal ($S_2$) ayant une seconde fréquence ($f_2$), en multipliant ledit autre premier signal ($S_1$) par ledit second signal de décalage ($S_0$').

**Patentansprüche**

1. Verfahren zur Schätzung eines Abstands (d), der ein Kraftfahrzeug (10), das mit einem ersten drahtlosen Kommunikationsmodul (12) ausgestattet ist, und einen Identifikator (20), der mit einem zweiten drahtlosen Kommunikationsmodul (22) ausgestattet ist, trennt, die folgenden Schritte umfassend:

a) Erzeugung und Senden, durch ein erstes der drahtlosen Kommunikationsmodule (12, 22), eines ersten Signals ($S_1$) und eines zweiten Signals ($S_2$), die eine erste bzw. zweite Frequenz ($f_1$, $f_2$) aufweisen, die verschieden sind,
b) Empfang, durch wenigstens das andere der drahtlosen Kommunikationsmodule (12, 22), des ersten und des zweiten Signals ($S_1$, $S_2$),
c) Bestimmung einer ersten Phase ($\Phi_1$) des Empfangs des ersten Signals ($S_1$) und einer zweiten Phase ($\Phi_2$) des Empfangs des zweiten Signals ($S_2$), und
d) Schätzung des Abstands (d) in Abhängigkeit von der ersten und zweiten Phase ($\Phi_1$, $\Phi_2$) und von der ersten und zweiten Frequenz ($f_1$, $f_2$), wobei in Schritt a) das zweite Signal ($S_2$) durch einen Kombinationsvorgang des ersten Signals ($S_1$) mit einem ersten Verschiebungssignal ($S_0$) erhalten wird, und wobei in Schritt c) die zweite Phase ($\Phi_2$) in Abhängigkeit von dem empfangenen zweiten Signal ($S_2$) und von einem zweiten Verschiebungssignal ($S_0$'), dessen Frequenz ($f_0$) mit derjenigen des ersten Verschiebungssignals ($S_0$) identisch ist, bestimmt wird, **dadurch gekennzeichnet, dass** in Schritt a) das zweite Signal ($S_2$) erhalten wird, indem das erste Signal ($S_1$) mit dem ersten Verschiebungssignal ($S_0$) multipliziert wird, und wobei in Schritt c) die zweite Phase ($\Phi_2$) bestimmt wird, indem das empfangene zweite Signal ($S_2$) mit dem zweiten Verschiebungssignal ($S_0$') multipliziert wird.

**2.** Verfahren zur Schätzung nach Anspruch 1, wobei in Schritt c) die erste Phase ($\Phi_1$) bestimmt wird, indem das empfangene erste Signal ($S_1$) mit einem Referenzsignal ($S_{ref}$) multipliziert wird, dessen Frequenz ($f_{ref}$) mit der ersten Frequenz ($f_1$) identisch ist.

**3.** Verfahren zur Schätzung nach Anspruch 2, wobei in Schritt c) die zweite Phase ($\Phi_2$) bestimmt wird, indem auch das zweite Signal ($S_2$) mit dem Referenzsignal ($S_{ref}$) multipliziert wird.

**4.** Verfahren zur Schätzung nach einem der vorhergehenden Ansprüche, wobei das erste Signal ($S_1$) von einem Phasenregelkreis (PLL) stammt, der auf die erste Frequenz ($f_1$) verriegelt ist.

**5.** Verfahren zur Schätzung nach einem der vorhergehenden Ansprüche, wobei die Schritte a) bis c) in mehreren aufeinander folgenden Sequenzen wiederholt werden, in jeder Sequenz mit einem anderen ersten Signal ($S_1$), und wobei in Schritt d) der Abstand (d) unter Berücksichtigung der Phasen und Frequenzen der während dieser Sequenzen verwendeten ersten und zweiten Signale geschätzt wird.

**6.** Verfahren zur Schätzung nach den beiden vorhergehenden Ansprüchen, wobei in Schritt a) jeder Sequenz das erste Signal ($S_1$) durch einen Vorgang der Verriegelung des Phasenregelkreises (PLL) geändert wird.

**7.** Verfahren zur Schätzung nach einem der beiden vorhergehenden Ansprüche, wobei in Schritt d) vorgesehen ist, einen Anstieg einer Regressionsgeraden zu bestimmen, die durch Punkte bestimmt ist, welche jeweils einer der Sequenzen zugeordnet sind und welche durch einen Wert der Abweichung zwischen der ersten und zweiten Frequenz ($f_1$, $f_2$) und durch einen Wert der Abweichung zwischen der ersten und zweiten Phase ($\Phi_1$, $\Phi_2$) definiert sind.

**8.** Verfahren zur Schätzung nach einem der vorhergehenden Ansprüche, wobei die Schritte a) bis c) in umgekehrter Richtung wiederholt werden, indem neue Signale von dem anderen drahtlosen Kommunikationsmodul (12, 22) zu dem ersten drahtlosen Kommunikationsmodul (12, 22) ausgetauscht werden, und wobei in Schritt d) der Abstand (d) unter Berücksichtigung der Phasen und Frequenzen der neuen Signale geschätzt wird.

**9.** Verfahren zur Steuerung einer Funktionalität eines Kraftfahrzeugs (10), welches einen Vorgang der Durchführung eines Verfahrens zur Schätzung gemäß einem der vorhergehenden Ansprüche und anschließend einen Vorgang der eventuellen Durchführung der Funktionalität in Abhängigkeit von dem geschätzten Abstand (d) umfasst.

**10.** Elektronikeinheit (11) für ein Kraftfahrzeug (10), welche dafür eingerichtet ist, mit einem außerhalb des Kraftfahrzeugs (10) befindlichen Identifikator (20) zu kommunizieren, umfassend:

- ein erstes Element, das dafür ausgelegt ist, ein erstes und ein zweites Signal ($S_1$, $S_2$) zu empfangen, die von dem Identifikator (20) gesendet wurden, wobei das zweite Signal ($S_2$) eine Frequenz ($f_2$) aufweist, die von der Frequenz ($f_1$) des ersten Signals ($S_1$) und von der Frequenz ($f_0$) eines ersten Verschiebungssignals ($S_0$) abhängig ist,
- ein zweites Element, das dafür ausgelegt ist, die Phasen ($\Phi_1$, $\Phi_2$) des ersten und des zweiten Signals ($S_1$, $S_2$) zu bestimmen, und
- ein drittes Element, das dafür ausgelegt ist, einen Abstand (d), der das Kraftfahrzeug (10) von dem Identifikator (20) trennt, auf der Basis der Phasen ($\Phi_1$, $\Phi_2$) und der Frequenzen ($f_1$, $f_2$) des ersten und zweiten Signals ($S_1$, $S_2$) zu schätzen, wobei das zweite Element dafür eingerichtet ist, die Phase ($\Phi_2$) des zweiten Signals ($S_2$) durch Multiplizieren des empfangenen zweiten Signals ($S_2$) mit einem zweiten Verschiebungssignal ($S_0'$) zu bestimmen, dessen Frequenz ($f_0$) mit derjenigen des ersten Verschiebungssignals ($S_0$) identisch ist, **dadurch gekennzeichnet, dass** das zweite Signal ($S_2$) erhalten wird, indem das erste Signal ($S_1$) mit dem ersten Verschiebungssignal ($S_0$) multipliziert wird, und wobei die zweite Phase ($\Phi_2$) bestimmt wird, indem das empfangene zweite Signal ($S_2$) mit dem zweiten Verschiebungssignal ($S_0'$) multipliziert wird.

**11.** Elektronikeinheit (11) nach dem vorhergehenden Anspruch, in welcher vorgesehen sind:

- ein viertes Element, das dafür ausgelegt ist, ein anderes erstes Signal ($S_1$) zu erzeugen, das eine erste Frequenz ($f_1$) aufweist, und
- ein fünftes Element, das dafür ausgelegt ist, ein anderes zweites Signal ($S_2$), das eine zweite Frequenz ($f_2$) aufweist, durch Multiplizieren des anderen ersten Signals ($S_1$) mit dem zweiten Verschiebungssignal ($S_0'$) zu erzeugen.

**Claims**

**1.** Method for estimating a distance (d) separating a motor vehicle (10) provided with a first wireless communication module (12) and an identifier (20) provided with a second wireless communication module (22), comprising the following steps:

a) producing and transmitting, by means of a first of the wireless communication modules (12, 22), a first signal ($S_1$) and a second signal ($S_2$) having distinct first and second frequencies ($f_1$, $f_2$), respectively;

b) receiving, by means of at least the other of the wireless communication modules (12, 22), said first and second signals ($S_1$, $S_2$);

c) determining a first phase ($\Phi_1$) of reception of the first signal ($S_1$) and a second phase ($\Phi_2$) of reception of the second signal ($S_2$); and

d) estimating said distance (d) according to the first and second phases ($\Phi_1$, $\Phi_2$) and the first and second frequencies ($f_1$, $f_2$),

in step a), said second signal ($S_2$) being obtained by means of an operation of combining said first signal ($S_1$) with a first offset signal ($S_0$), and

in step c), the second phase ($\Phi_2$) being determined according to said received second signal ($S_2$) and a second offset signal ($S_0$'), the frequency ($f_0$) of which is identical to that of said first offset signal ($S_0$),

**characterized in that** in step a), said second signal ($S_2$) is obtained by multiplying said first signal ($S_1$) by the first offset signal ($S_0$) and wherein, in step c), the second phase ($\Phi_2$) is determined by multiplying the received second signal ($S_2$) by the second offset signal ($S_0$').

2. Estimating method according to Claim 1, wherein, in step c), the first phase ($\Phi_1$) is determined by multiplying the received first signal ($S_1$) by a reference signal ($S_{ref}$), the frequency ($f_{ref}$) of which is identical to the first frequency ($f_1$).

3. Estimating method according to Claim 2, wherein, in step c), the second phase ($\Phi_2$) is determined by also multiplying the second signal ($S_2$) by said reference signal ($S_{ref}$).

4. Estimating method according to one of the preceding claims, wherein the first signal ($S_1$) is derived from a phase-locked loop (PLL) locked to said first frequency ($f_1$).

5. Estimating method according to one of the preceding claims, wherein steps a) to c) are repeated over a plurality of successive sequences, with, in each sequence, a different first signal ($S_1$), and wherein in step d), said distance (d) is estimated with the phases and frequencies of the first and second signals used in said sequences taken into account.

6. Estimating method according to the two preceding claims, wherein, in step a) of each sequence, said first signal ($S_1$) is modified by means of an operation of locking the phase-locked loop (PLL).

7. Estimating method according to one of the two preceding claims, wherein, in step d), provision is made to determine a slope of a regression line related to points which are each associated with one of said sequences and which are defined by a value of the difference between the first and second frequencies ($f_1$, $f_2$) and by a value of the difference between the first and second phases ($\Phi_1$, $\Phi_2$).

8. Estimating method according to one of the preceding claims, wherein steps a) to c) are repeated in reverse order, by switching new signals from said other wireless communication module (12, 22) to the first wireless communication module (12, 22), and wherein in step d), said distance (d) is estimated with the phases and frequencies of the new signals taken into account.

9. Method for controlling a functionality of a motor vehicle (10), comprising an operation of implementing an estimating method according to one of the preceding claims, followed by a potential operation of implementing said functionality according to the estimated distance (d).

10. Electronic unit (11) for a motor vehicle (10) suitable for communicating with an identifier (20) external to the motor vehicle (10), comprising:

- a first element designed to receive first and second signals ($S_1$, $S_2$) transmitted by said identifier (20), said second signal ($S_2$) having a frequency ($f_2$) dependent on the frequency ($f_1$) of the first signal ($S_1$) and on the frequency (f0) of a first offset signal ($S_0$);

- a second element designed to determine the phases ($\Phi_1$, $\Phi_2$) of the first and second signals ($S_1$, $S_2$); and

- a third element designed to estimate a distance (d) separating the motor vehicle (10) from the identifier (20) on the basis of the phases ($\Phi_1$, $\Phi_2$) and the frequencies ($f_1$, $f_2$) of the first and second signals ($S_1$, $S_2$),

said second element being suitable for determining the phase ($\Phi_2$) of the second signal ($S_2$) by multiplying the received second signal ($S_2$) by a second offset signal ($S_0$'), the frequency ($f_0$) of which is identical to the that of said first offset signal ($S_0$),

**characterized in that** said second signal ($S_2$) is obtained by multiplying said first signal ($S_1$) by a first offset signal ($S_0$) and wherein the second phase ($\Phi_2$) is determined by multiplying the received second signal ($S_2$) by the second offset signal ($S_0$').

11. Electronic unit according to the preceding claim, wherein provision is made for:

- a fourth element designed to produce another first signal ($S_1$) having a first frequency ($f_1$); and
- a fifth element designed to produce another second signal ($S_2$) having a second frequency ($f_2$), by multiplying said other signal ($S_1$) by said second offset signal ($S_0'$).

# Fig.1

# Fig.2

# Fig.3

**RÉFÉRENCES CITÉES DANS LA DESCRIPTION**

**Documents brevets cités dans la description**

- US 2003090365 A